(19) Europäisches Patentamt
European Patent Office
Office européen des brevets

(11) **EP 2 697 099 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(51) Int Cl.:
*B60S 1/08* *(2006.01)*  *B60K 31/00* *(2006.01)*
*G01S 13/93* *(2006.01)*

(21) Anmeldenummer: **12720405.5**

(22) Anmeldetag: **30.03.2012**

(86) Internationale Anmeldenummer:
**PCT/DE2012/100083**

(87) Internationale Veröffentlichungsnummer:
**WO 2012/139560 (18.10.2012 Gazette 2012/42)**

(54) **ERKENNUNG VON EIS AUF EINER FAHRZEUGSCHEIBE MITTELS INTERNEN TEMPERATURSENSOR**

DETECTION OF ICE ON A VEHICLE WINDOW BY MEANS OF AN INTERNAL TEMPERATURE SENSOR

DÉTECTION DE GIVRE SUR UNE VITRE DE VÉHICULE AU MOYEN D'UN CAPTEUR DE TEMPÉRATURE INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2011 DE 102011017085**
**27.06.2011 EP 11464005**

(43) Veröffentlichungstag der Anmeldung:
**19.02.2014 Patentblatt 2014/08**

(73) Patentinhaber:
• **Conti Temic Microelectronic GmbH**
**90411 Nürnberg (DE)**
• **Continental Automotive GmbH**
**30165 Hannover (DE)**

(72) Erfinder:
• **GÖTZ, Mario**
**89343 Jettingen (DE)**
• **VOGL, Armin**
**86573 Obergriesbach (DE)**
• **STEURER, Helmut**
**85302 Gerolsbach-Junkenhofen (DE)**
• **IORDACHESCU, Dionisie-Catalin**
**R-240216 Rimnicu Vilcea (RO)**

(74) Vertreter: **Bobbert, Christiana**
**Conti Temic microelectronic GmbH**
**Patente & Lizenzen**
**Sieboldstrasse 19**
**90411 Nürnberg (DE)**

(56) Entgegenhaltungen:
**DE-A1- 19 755 008     DE-A1-102009 001 239**
**DE-A1-102009 032 506     US-A1- 2001 050 766**

**Beschreibung**

In Kraftfahrzeugen werden heutzutage vermehrt Fahrerassistenzsysteme mit Sensorvorrichtungen eingesetzt. Die Sensorvorrichtungen dienen dabei beispielsweise zur Abstands-oder Geschwindigkeitsmessung und umfassen hierzu insbesondere wenigstens eine Sendeeinheit, zum Aussenden von Licht bzw. von elektromagnetischer Strahlung, beispielsweise im Infrarotbereich, in einen Beobachtungsraum, und wenigstens eine Empfangseinheit zum Empfangen des an/von Objekten im Beobachtungsraum reflektierten Lichts. Derartige Sensorvorrichtungen sind in der Regel hinter einer geneigten transparenten Scheibe, wie z.B. der Windschutzscheibe, angebracht. Beim Einsatz von Abstandssensoren, insbesondere eines CV Sensors (closing velocity sensor), z.B. im Rahmen der Vermeidung von Auffahrunfällen in einem begrenzten Geschwindigkeitsbereich oder zur Anpassung der eigenen Geschwindigkeit an ein vorausfahrendes Fahrzeug, wird die Intensität von rückgestrahltem Lichts verwendet, um ein im Beobachtungsraum befindliches Objekt (auch als Target bezeichnet) als relevantes Hindernis (relevantes Objekt) zu qualifizieren bzw. zu bewerten.

Wenn nun die Scheibe, hinter welcher die Sensorvorrichtung angeordnet ist, vereist ist, wird das von der Sensorvorrichtung ausgestrahlte Licht durch Eiseffekte auf der Scheibe zumindest teilweise in Richtungen abgestrahlt, die nicht im originalen und gewollten Ausstrahlungsbereich der Sensorvorrichtung liegen. Dieser Effekt wird auch als Streulichteffekt bezeichnet. Durch ungewollte Abstrahlung des ausgestrahlten Lichts, z.B. nach oben, werden durch Streulichteffekte beispielsweise Reflektoren, die an Decken von Parkhäusern oder in Unterführungen angebracht sind, als relevante Hindernisse interpretiert, auch wenn sie nicht im Fahrschlauch (im Fahrweg) des Fahrzeugs liegen. Sie erzeugen sogenannte False Positives (Scheinobjekte), d.h. Ereignisse die ein Fahrerassistenzsystem, beispielsweise ein ACC-System (Adaptive/Active Cruise Control) und/oder einen Bremsassistenzsystem zum Bremsen veranlassen, obwohl die Bremsung nicht notwendig ist.

Ein signifikantes Merkmal der Streulichteffekte ist dabei, dass die Intensität des, insbesondere von Scheinobjekten, rückgestrahlten Lichts mehrheitlich nur knapp über der Relevanzschwelle zu liegen kommt, d.h. über dem Schwellwert ab dem ein Objekt, aufgrund der Intensität des rückgestrahlten Lichts, als relevantes Hindernis qualifiziert wird. Eine Möglichkeit, derartige Streulichteffekte aufgrund einer vereisten Scheibe zumindest teilweise zu unterdrücken oder zu vermeiden, besteht deshalb darin, mittels geeigneter Verfahren oder Vorrichtungen abzuschätzen, ob grundsätzlich die Wahrscheinlichkeit einer vereisten Scheibe besteht. Wenn z.B. die Außentemperatur bekannt ist und damit auch die Wahrscheinlichkeit einer vereisten Windschutzscheibe, beispielsweise bei Temperaturen unterhalb von Null Grad, kann die Relevanz- bzw. Intensitätsschwelle, die vom rückgestrahlten Licht überschritten werden muss, so dass ein Objekt bzw. ein Target von der Sensorvorrichtung oder einer nachgeschalteten Auswerteeinheit als relevantes Objekt bewertet wird, z.B. bei negativen Temperaturwerten höher gesetzt werden, so dass die Scheinobjekte (False Positives) aus Streureflektionen (d.h. aufgrund von Streulichteffekten) mehrheitlich ausgeblendet bzw. nicht als relevante Objekte qualifiziert werden. Mit der Änderung einer oder mehrerer Intensitätsschwellen der Sensorvorrichtung geht insbesondere eine generelle Reduzierung der Empfindlichkeit der Sensorvorrichtung einher, die letztlich die Anwendungsfälle, die ausreichend gut gelöst werden, verringert. Bei Anwendungsfällen handelt es sich beispielsweise um Fälle bei denen aufgrund eines durch die Sensorvorrichtung detektierten Hindernisses insbesondere durch einen Bremsassistenten das Fahrzeug automatisch abgebremst wird. Ein gut gelöster, oder anders ausgedrückt, ein optimal gelöster Anwendungsfall ist z.B. dann gegeben, wenn das automatisch abgebremste Fahrzeug in einem vorab definierten Abstand zum Hindernis zum Stillstand kommt. Der vordefinierte Abstand kann bei 0,5 bis 1 m liegen, je nach Geschwindigkeitsbereich in dem die Bremsung durchgeführt wurde. Ein ausreichend gut gelöster Anwendungsfall ist vorzugsweise der Fall, wenn es bei einer automatischen Bremsung zu keinem Kontakt mit dem Hindernis kommt, die vorab definierten Abstände jedoch nicht mehr eingehalten werden können. Das Fahrzeug kann beispielsweise bei einer Geschwindigkeit von 20 km/h, d. h. bei einem 20 km/h Anwendungsfall, nicht wie vorgesehen 90 cm vor dem Hindernis zum stehen kommen, sondern erst 20 cm davor. Der Fall (Anwendungsfall) ist nach wie vor gut bzw. in diesem Fall ausreichend gut gelöst (es kam zu keiner Kollision), doch der gewünschte Abstand konnte am Ende des Bremseingriffes doch nicht eingehalten werden.

Das vorangehend beschriebene Problem wurde bislang mit Außentemperatursensoren gelöst, wobei eine unempfindlichere Kalibrierung, d.h. höhere Intensitäts- bzw. Relevanzschwellwerte in der Regel solange verwendet werden, solange die Außentemperatur negative Temperaturwerte anzeigt. In einer Abwandlung wird die unempfindlichere Kalibrierung bei negativen Temperaturen gestartet und nur für eine bestimmte Zeit gehalten.

Die US 2001/0050766 A1 offenbart ein Verfahren nach dem Oberbegriff des Anspruchs 1.

Der Erfindung liegt die Aufgabe zugrunde, ein Verfahren und eine Vorrichtung für eine robuste und zuverlässige Erkennung von Eis bzw. der Wahrscheinlichkeit von Eis auf einer Fahrzeugscheibe und eine geeignete Anpassung der Signalverarbeitung einer hinter der Fahrzeugscheibe angeordneten Sensorvorrichtung anzugeben.

Die Aufgabe wird gemäß der unabhängigen Ansprüche gelöst.

Ein wesentlicher Gedanke der Erfindung besteht darin, zur Erkennung einer vereisten Scheibe bzw. zur Erkennung der Wahrscheinlichkeit von Eis auf der Scheibe, ein Temperatursignal heranzuziehen, wobei in diesem Fall das Temperatursignal mindestens eines Temperatursensors verwendet wird, der in der Sensorvorrichtung, beispielsweise in einem einem Lidar- bzw. Radar-Sensor, bereits vorhanden bzw. integriert ist. Die Sensorvorrichtung ist an oder in der Nähe der Scheibe eines Fahrzeugs angeordnet. Bevorzugt handelt es sich bei dem Temperatursensor somit um einen bereits in die Sensorvorrichtung integrierten Temperatursensor. Der in die Sensorvorrichtung bereits integrierte bzw. der interne Temperatursensor kann im Wesentlichen zum Zwecke der Messung der Betriebstemperatur der Sensorvorrichtung und damit insbesondere zur Vermeidung von Überhitzungen der Sensorvorrichtung während des Betriebes in die Sensorvorrichtung integriert sein, wobei eine Überhitzung beispielsweise durch Anpassung der Intensität und/oder Amplitude und/oder Frequenz der ausgesendeten Strahlung auf Basis des Temperatursignals des wenigstens einen internen Temperatursensors vermieden wird oder eine Kühlvorrichtung vorgesehen ist.

Das Temperatursignal, welches erfindungsgemäß zur Erkennung von Eis bzw. der Wahrscheinlichkeit von Eis auf einer Fahrzeugscheibe verwendet wird, wird also mittels wenigstens eines Temperatursensors erzeugt, der z.B. auf einer Platine der Sensorvorrichtung angeordnet bzw. integriert ist, wobei der interne Temperatursensor, wie bereits vorgehend beschrieben, im Wesentlichen aus einer anderen Problematik heraus bzw. zur Erfüllung wenigstens einer weiteren Funktion in der Sensorvorrichtung angeordnet ist, insbesondere zur Erkennung, ob das Sensorinnenambiente hohe Temperaturen überschreitet (Vermeidung von Überhitzungen). Erfindungsgemäß kann die Sensorvorrichtung auch mehr als nur einen internen Temperatursensor, insbesondere zur Überwachung der Betriebstemperatur umfassen. In diesem Fall können die Temperatursignale der mehreren internen Temperatursensoren zur Erkennung von Eis bzw. Eiswahrscheinlichkeit herangezogen werden.

Die vorgeschlagene Lösung, über das interne Temperatursignal der Sensorvorrichtung auf das Vorhandensein bzw. die Wahrscheinlichkeit von Eis auf der Fahrzeugscheibe zu schließen, hat beispielsweise den Vorteil, dass die Temperatur direkt dort gemessen wird, wo sich die Sensorvorrichtung im Fahrzeug befindet und durch die Fahrzeugscheibe blickt, nämlich direkt im Gehäuse der Sensorvorrichtung und unmittelbar hinter dem Windschutzscheibenabschnitt, durch den Licht abgestrahlt und reflektiertes Licht empfangen wird. Aufgrund der Tatsache, dass der Temperatursensor ohnehin in der Sensorvorrichtung integriert ist, können Kosten, beispielsweise gegenüber Lösungen mit Anordnung eines zusätzlichen (externen) Temperatursensors, eingespart werden. Der Vorteil der erfindungsgemäßen Nutzung des internen bzw. integrierten Temperatursensors gegenüber der Nutzung einer externen Temperaturinformation liegt weiterhin darin, dass die interne Temperatur die Realität über die Eisfreiheit vor der Sensorvorrichtung deutlich besser wiedergibt. Ein externer Temperatursensor kann sehr weit weg von der Sensorvorrichtung angeordnet sein kann, z.B. in einem der Rückspiegel, und negative Temperaturen anzeigen, wenn der Bereich der Fahrzeugscheibe, hinter dem die Sensorvorrichtung angeordnet ist, bereits frei von Eis ist. Mit der internen Temperatur kann die tatsächliche Situation deutlich realistischer erfasst werden, da bei internen Temperaturen größer dem Gefrierpunkt, die Wahrscheinlichkeit hoch ist, dass die Sensorvorrichtung bzw. der relevante Bereich der Fahrzeugscheibe frei von Eis ist.

Das interne Temperatursignal kann insbesondere zum Zeitpunkt des Startens des Fahrzeugs herangezogen werden. Dies hat im Wesentlichen den Vorteil, dass beim Starten des Motors die Betriebstemperatur der Sensorvorrichtung hoch wenig oder noch gar keine Auswirkung auf die mittels des wenigstens einen internen Temperatursensors erfasste Temperatur hat und bei negativen Außentemperaturen zum Zeitpunkt des Startens des Fahrzeugs diese auch anzeigt.

Mit steigender Betriebsdauer nimmt die Temperatur im Sensorgehäuse der Sensorvorrichtung in der Regel zu und kann auch bei kontinuierlichen negativen Außentemperaturen positive Werte annehmen. Die Innenerwärmung im Sensorgehäuse sowie das Fahrerverhalten des Fahrers führen mit der Zeit dazu, dass das Eis vor der Sensorvorrichtung auf der Windschutzscheibe verschwindet, beispielsweise durch Aktivierung einer Innenraumbeheizung oder einer Scheibenwischanlage.

Die Sensorvorrichtung wird bevorzugt dann mit einer sogenannten Winterkalibrierung gestartet, wenn der interne Temperatursensor eine Temperatur unterhalb von Null Grad (°C) oder eine geringfügig über Null Grad liegende Temperatur (z.B. 1, 2 oder 3°C), insbesondere beim Starten des Motors, misst. Die Winterkalibrierung bewirkt vorzugsweise, dass eine oder mehrere Detektionsschwellen (Intensitäts- bzw. Relevanzschwellen) für relevante Objekt bei der Signalverarbeitung angehoben sind, d.h. einer oder mehrere Schwellwerte, beispielsweise für die Intensität des rückgestrahlten Lichts, ab der ein reflektierendes Objekt als relevantes Hindernis bewertet wird.

Die Sensorvorrichtung kann nach einer einstellbaren Zeit (z. B. drei, vier, fünf oder mehr Minuten) auf eine normale Kalibrierung (z.B. eine Kalibrierung bei eisfreier Fahrzeugscheibe) und damit auf die normalen Detektionsschwellen für relevante Objekte bei der Signalverarbeitung umgeschaltet werden, insbesondere wenn die mittels des internen Temperatursensors ermittelte Temperatur den Gefrierpunkt oder eine bestimmte positive Temperaturschwelle (z.B. 2 oder 3 °C oder 4 oder 5 °C) überschreitet.

Führt man Zeitintervalle ein, für die man bei Minustemperaturen oder geringfügig über Null Grad liegender Temperatur die geringere Empfindlichkeit (höhere Detektionsschwellen) nach dem Starten des Fahrzeugs wirken lässt, dann ist der Rückgang der ausreichend gut gelösten Anwendungsfälle nur für diese Zeiträume zu sehen. Damit wird die geringere Empfindlichkeit nur für einen begrenzten Zeitraum wirksam, die gesamte Situation wird statistisch jedoch deutlich verbessert.

Nachfolgend werden bevorzugte Ausführungen bei der Nutzung des internen Temperatursignals vorgeschlagen:

a) Nutzung des internen Temperatursensors bzw. des internen Temperatursignals einer Sensorvorrichtung zum Erkennen, ob beim Starten des Fahrzeugs bzw. bei Fahrtbeginn Frost herrscht (z.B. Temperaturen < 0°C, < 3°C, < 4°C) und ob damit die Wahrscheinlichkeit für Eis auf der Fahrzeugscheibe hoch ist. Wird das Fahrzeug bei negativen Temperaturen gestartet, folgt die Anwendung einer oder mehrerer erhöhter Detektionsschwellen für eine bestimmte Zeitdauer.

Die Zeitdauer, für die die eine oder die mehreren erhöhten Detektionsschwellen angewendet werden, kann als konstanter Wert und/oder als Funktion insbesondere der Starttemperatur ausgebildet sein. Bei Ausgestaltung der Zeitdauer beispielsweise als Funktion der Starttemperatur kann derart verfahren werden, dass je niedriger das interne Temperatursignal zum Zeitpunkt der Inbetriebnahme des Fahrzeugs bzw. des Systems ist, die Zeitdauer für die erhöhten Detektionsschwellen umso länger gewählt wird. Formal kann dies wie folgt dargestellt werden:

$$t_{erhöhte\ Detektionsschwelle} = f\ (T_{zum\ Startzeitpunkt})$$

wobei $t_{erhöhte\ Detektionsschwelle}$ die Zeitdauer für die Anwendung der erhöhten Detektionsschwelle und $T_{zum\ Startzeitpunkt}$ die Temperatur, die zum Zeitpunkt des Systemstarts intern gemessen wurde bezeichnet.

b) Nutzung des internen Temperatursensors bzw. des internen Temperatursignals wie unter Punkt a). Wird das Fahrzeug bei negativen Temperaturen oder bei knapp über Null Grad liegenden Temperaturen gestartet, folgt die Anwendung einer erhöhten Detektionsschwellen für eine bestimmte Zeitdauer sowie bis eine positive Temperatur überschritten bzw. ein positives Temperatursignal erzeugt wird (z.B. Temperatur größer als 0°C oder 1°C oder 2°C oder 3°C oder 4°C).

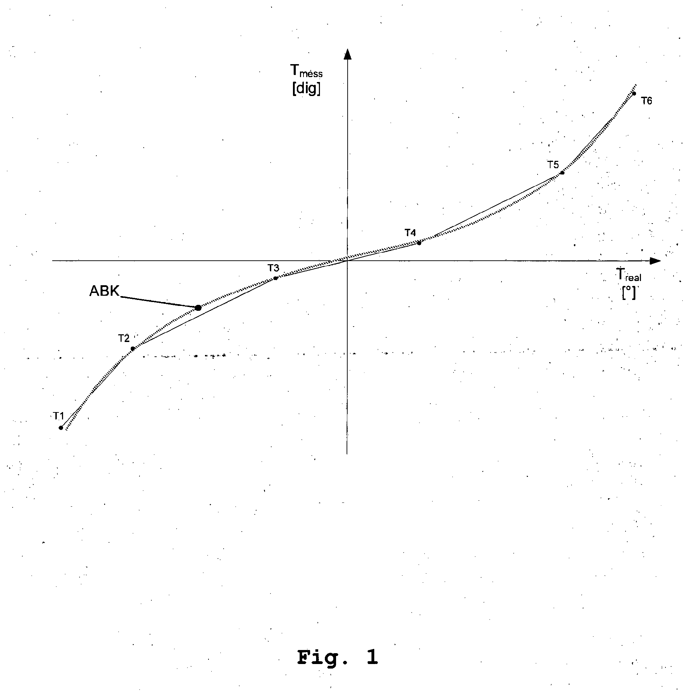

c) Nutzung des internen Temperatursensors bzw. des internen Temperatursignals wie unter Punkt a) oder b). Gewinnung einer höheren Genauigkeit der internen Temperatur durch Nutzung von Stützstellen in einem nichtflüchtigen Speicher, insbesondere um den Gefrierpunkt (0 Grad Celsius). Die Nutzung von Stützstellen ist insbesondere dann vorteilhaft, wenn der Temperatursensor keine lineare Abbildung der realen Temperatur darstellt. Das Verfahren mit Stützstellen kann entsprechend Fig. 1 dargestellt werden mit Stützstellen T1 bis T6 und der Abbildungskurve ABK des Temperatursensors.

Entsprechend Fig. 1 werden Abschnitte über die Stützstellen (z.B. T1 bis T6) definiert und entsprechende Formeln, wie man vom Messwert $T_{mess}$ den realen Temperaturwert $T_{real}$ gewinnt:

$$T_{real} = \frac{y_{T6} - y_{T5}}{x_{T6} - x_{T5}} \cdot T_{mess} + T5 \quad für \quad [T5 \leq T_{mess} < T6]$$

$$T_{real} = \frac{y_{T5} - y_{T4}}{x_{T5} - x_{T4}} \cdot T_{mess} + T4 \quad für \quad [T4 \leq T_{mess} < T5]$$

$$T_{real} = \frac{y_{T4} - y_{T3}}{x_{T4} - x_{T3}} \cdot T_{mess} + T3 \quad für \quad [T3 \leq T_{mess} < T4]$$

$$T_{real} = \frac{y_{T3} - y_{T2}}{x_{T3} - x_{T2}} \cdot T_{mess} + T2 \quad für \quad [T2 \leq T_{mess} < T3]$$

$$T_{real} = \frac{y_{T2} - y_{T1}}{x_{T2} - x_{T1}} \cdot T_{mess} + T1 \quad für \quad [T1 \leq T_{mess} < T2]$$

d) Nutzung des internen Temperatursensors bzw. des internen Temperatursignals wie unter Punkt a), b) oder c). Anwendung einer Hysterese (z.B. eine bestimmte Zeitdauer) für die Umschaltung von den normalen zu den erhöhten Detektiönsschwellen für relevante Objekte und umgekehrt, insbesondere wenn, wie im Fall b), die interne Temperatur mit herangezogen wird. Da im Fall b) nach dem Starten des Fahrzeug bei negativer interner Temperatur oder bei interner Temperatur knapp über Null Grad mit erhöhten Detektionsschwellen für relevante Objekte begonnen wird, kann nach Ablauf einer bestimmten Zeit und bei gleichzeitiger Überschreitung eines positiven Schwellwertes durch die Innentemperatur eine normale Kalibrierung für die Detektionsschwellen für relevante Objekte wieder eingenommen werden.

Wenn die interne Temperatur der Sensorvorrichtung, insbesondere nach vorherigem Überschreiten des Gefrierpunktes während des Betriebes, (wieder) unter eine niedriger liegende Temperaturschwelle fällt und der interne Temperatursensor ein entsprechendes internes Temperatursignal liefert, beispielsweise bei Temperaturen unterhalb von Null Grad (°C), dann wird vorzugsweise (wieder) auf die Kalibrierung mit den erhöhten Detektionsschwellen für relevante Objekte zurückgeschaltet, insbesondere mit einer Hysterese.

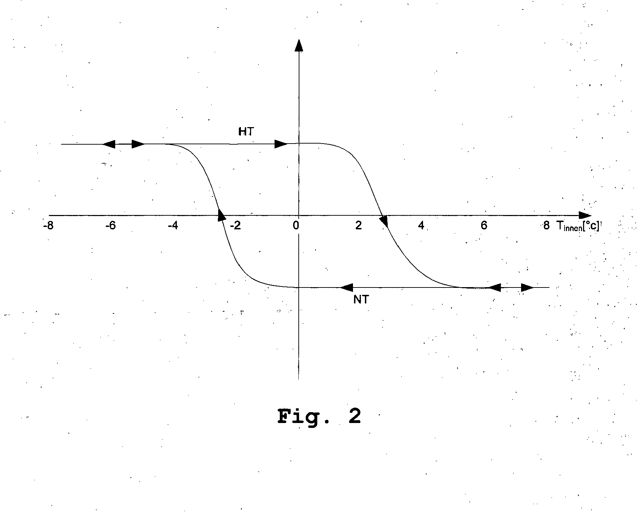

Eine beispielhafte Ausgestaltung mit unterschiedlichen Detektionschwellen, d.h. mit unterschiedlichen Schwellwerte, ab denen ein Objekt als relevantes Hindernis qualifiziert wird, wobei die Höhe der Detektionschwellen davon abhängig ist, ob sich Eis auf der Fahrzeugscheibe befindet oder ob zumindest die Wahrscheinlichkeit von Eis auf der Fahrzeugscheibe besteht, zeigt Fig. 2.

In Fig. 2 ist eine erste Kurve HT mit erhöhtem Grenzwert bzw. Schwellwert dargestellt und eine zweite Kurve NT mit normalem Grenzwert bzw. Schwellwert.

$T_{innen}$ = Temperatur im Sensorgehäuse der Sensorvorrichtung, die mittels wenigstens eines internen/integrierten Temperatursensors ermittelt wird.

## Patentansprüche

1. Verfahren zur Anpassung einer Signalverarbeitung
   wenigstens einer elektromagnetische Strahlung aussendenden Sensorvorrichtung, die hinter einer Scheibe in einem Kraftfahrzeug angeordnet ist,
   wobei eine Anpassung der Signalverarbeitung eine Änderung wenigstens eines Detektionsschwellwertes umfasst, wenn aufgrund einer ermittelten Temperatur eine Wahrscheinlichkeit, dass sich Eis auf der Scheibe befindet, erkannt wird,
   **dadurch gekennzeichnet, dass**
   zur Erkennung der Wahrscheinlichkeit von Eis auf der Scheibe ein Temperatursignal wenigstens eines Temperatursensors verwendet wird, der in die Sensorvorrichtung integriert ist.

2. Verfahren nach Anspruch 1, **dadurch gekennzeichnet, dass** der wenigstens eine Temperatursensor im Wesentlichen zur Erfüllung wenigstens einer weiteren Funktion in die Sensorvorrichtung integriert ist.

3. Verfahren nach Anspruch 1 oder 2, **dadurch gekennzeichnet, dass**
   das Temperatursignal des wenigstens einen Temperatursensors ausschließlich beim Starten des Kraftfahrzeugs zur Erkennung der Wahrscheinlichkeit von Eis auf der Scheibe genutzt wird.

4. Verfahren nach Anspruch 2 oder 3, **dadurch gekennzeichnet,**
   **dass**
   es sich bei der wenigstens einen weiteren Funktion um
   eine laufende Ermittlung einer Betriebstemperatur der Sensorvorrichtung handelt, insbesondere zur Vermeidung von Überhitzung.

5. Verfahren nach einem der vorangegangenen Ansprüche,
   **dadurch gekennzeichnet, dass**
   bei der Ermittlung der Temperatur mittels des wenigstens einen Temperatursensors Stützstellen in einem nichtflüchtigen Speicher verwendet werden.

6. Verfahren nach einem der vorangegangenen Ansprüche,
   **dadurch gekennzeichnet, dass**
   die Änderung des wenigstens einen Detektionsschwellwertes für eine vorgegebene Zeitdauer beibehalten wird.

**7.** Verfahren nach einem der vorherigen Ansprüche
**dadurch gekennzeichnet, dass**
die Anwendung einer Hysterese für die Umschaltung von den normalen zu den erhöhten Detektionsschwellen für relevante Objekte und umgekehrt vorgesehen ist.

**8.** Verwendung eines Temperatursensors in einem Verfahren zur Anpassung einer Signalverarbeitung wenigstens einer elektromagnetische Strahlung aussendenden Sensorvorrichtung gemäß einem der Ansprüche 1-7 **dadurch gekennzeichnet, dass**
zur Erkennung der Wahrscheinlichkeit von Eis auf der Scheibe ein Temperatursignal wenigstens eines Temperatursensors verwendet wird, der in die Sensorvorrichtung integriert ist.

**9.** Elektromagnetische Strahlung aussendenden Sensorvorrichtung, die hinter einer Scheibe in einem Kraftfahrzeug anordenbar ist, mit einem integrierten
Temperatursensor und Speichermittel auf dem ein Verfahren nach einem der Ansprüche 1-7 hinterlegt ist

**Claims**

**1.** A method for adapting a signal processing of at least one sensor device that emits electromagnetic radiation and is arranged behind a windowpane in a motor vehicle,
wherein an adaptation of the signal processing comprises a change of at least one detection threshold if, due to a temperature that has been determined, a probability of ice on the windowpane is detected,
**characterized in that**
a temperature signal of at least one temperature sensor integrated in the sensor device is used to detect the probability of ice on the windowpane.

**2.** The method according to claim 1, **characterized in that** the at least one temperature sensor is essentially integrated in the sensor device to perform at least one other function.

**3.** The method according to claim 1 or 2, **characterized in that**
the temperature signal of the at least one temperature sensor is only used to detect the probability of ice on the windowpane when the motor vehicle is started.

**4.** The method according to claim 2 or 3, **characterized in that**
the at least one other function is a continuous determination of an operating temperature of the sensor device, in particular to avoid overheating.

**5.** The method according to any one of the preceding claims, **characterized in that**
grid points in a non-volatile memory are used when the temperature is determined by means of the at least one temperature sensor.

**6.** The method according to any one of the preceding claims, **characterized in that**
the change of the at least one detection threshold is maintained for a predefined period of time.

**7.** The method according to any one of the preceding claims, **characterized in that**
use is made of a hysteresis for switching from the normal to the increased detection thresholds for relevant objects and vice versa.

**8.** Use of a temperature sensor in a method for adapting a signal processing of at least one sensor device that emits electromagnetic radiation according to any one of claims 1-7,
**characterized in that**
a temperature signal of at least one temperature sensor integrated in the sensor device is used to detect the probability of ice on the windowpane.

**9.** A sensor device that emits electromagnetic radiation and can be arranged behind a windowpane in a motor vehicle, including an integrated temperature sensor and storage means on which a method according to any one of claims 1-7 is stored.

**Revendications**

1. Procédé d'adaptation d'un traitement du signal d'au moins un dispositif de capteur, émettant un rayonnement électromagnétique, qui est disposé derrière une vitre dans un véhicule automobile, une adaptation du traitement du signal comprenant une modification d'au moins une valeur de seuil de détection quand, sur la base d'une température déterminée, il est détecté qu'une présence de glace sur la vitre est probable, **caractérisé en ce que**, pour la détection de la probabilité de glace sur la vitre, il est utilisé un signal de température d'au moins un capteur de température qui est intégré dans le dispositif de capteur.

2. Procédé selon la revendication 1, **caractérisé en ce que** le capteur de température au moins au nombre de un est intégré dans le dispositif de capteur essentiellement pour la réalisation d'au moins une autre fonction.

3. Procédé selon la revendication 1 ou 2, **caractérisé en ce que** le signal de température du capteur de température au moins au nombre de un est utilisé exclusivement lors du démarrage du véhicule automobile pour détecter la probabilité de glace sur la vitre.

4. Procédé selon la revendication 2 ou 3, **caractérisé en ce que**, concernant l'autre fonction au moins au nombre de un, il s'agit d'une détermination continue d'une température de fonctionnement du dispositif de capteur, en particulier pour éviter une surchauffe.

5. Procédé selon l'une des revendications précédentes, **caractérisé en ce que**, lors de la détermination de la température au moyen du capteur de température au moins au nombre de un, des points d'appui sont utilisés dans une mémoire non volatile.

6. Procédé selon l'une des revendications précédentes, **caractérisé en ce que** la modification de la valeur de seuil de détection au moins au nombre de un est maintenue pendant une durée prédéfinie.

7. Procédé selon l'une des revendications précédentes, **caractérisé en ce qu'**il est prévu l'utilisation d'une hystérésis pour la commutation des seuils de détection normaux vers les seuils de détection accrus pour des objets pertinents et inversement.

8. Utilisation d'un capteur de température dans un procédé d'adaptation d'un traitement du signal d'au moins un dispositif de capteur, émettant un rayonnement électromagnétique, selon l'une des revendications 1-7, **caractérisée en ce que**, pour la détection de la probabilité de glace sur la vitre, il est utilisé un signal de température d'au moins un capteur de température qui est intégré dans le dispositif de capteur.

9. Dispositif de capteur, émettant un rayonnement électromagnétique, qui peut être disposé derrière une vitre dans un véhicule automobile, avec un capteur de température intégré et un moyen de mémoire sur lequel est enregistré un procédé selon l'une des revendications 1-7.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010050766 A1